(19) Europäisches Patentamt
European Patent Office
Office européen des brevets

(11) **EP 2 342 455 B1**

(12) **EUROPÄISCHE PATENTSCHRIFT**

(45) Veröffentlichungstag und Bekanntmachung des Hinweises auf die Patenterteilung:
**17.09.2014   Patentblatt 2014/38**

(21) Anmeldenummer: **09744912.8**

(22) Anmeldetag: **09.10.2009**

(51) Int Cl.:
*F03D 9/00* *(2006.01)*      *F03D 11/00* *(2006.01)*
*F03D 11/02* *(2006.01)*

(86) Internationale Anmeldenummer:
**PCT/AT2009/000396**

(87) Internationale Veröffentlichungsnummer:
**WO 2010/040168 (15.04.2010 Gazette 2010/15)**

(54) **WINDKRAFTANLAGE**

WIND POWER STATION

ÉOLIENNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.10.2008   AT 15792008**

(43) Veröffentlichungstag der Anmeldung:
**13.07.2011   Patentblatt 2011/28**

(73) Patentinhaber: **Hehenberger, Gerald**
**9020 Klagenfurt (AT)**

(72) Erfinder: **Hehenberger, Gerald**
**9020 Klagenfurt (AT)**

(74) Vertreter: **Beer & Partner Patentanwälte KG**
**Lindengasse 8**
**1070 Wien (AT)**

(56) Entgegenhaltungen:
**WO-A1-2007/042847      WO-A2-2008/061263**
**DE-A1- 19 955 586**

**Beschreibung**

Die Erfindung betrifft eine Energiegewinnungsanlage, insbesondere Windkraftanlage, mit einer Antriebswelie, einem Generator und mit einem Differentiaigetriebe mit drei An- bzw. Abtrieben, wobei ein erster Antrieb mit der Antriebswelle, ein Abtrieb mit einem Generator und ein zweiter Antrieb mit einer elektrischen Maschine als Differential-Antrieb verbunden ist.

Windkraftwerke gewinnen zunehmend an Bedeutung als Elektrizitätserzeugungsanlagen. Dadurch erhöht sich kontinuierlich der prozentuale Anteil der Stromerzeugung durch Wind. Dies wiederum bedingt einen Trend zu noch größeren Windkraftanlagen. Gleichzeitig ist ein Trend Richtung Off-shore-Windkraftanlagen erkennbar, welcher Anlagongrößen von zumindest 5MW installierter Leistung fordert. Durch die hohen Kosten für Infrastruktur und Wartung bzw. Instandhaltung der Windkraftanlagen im Offshore-Bereich gewinnen hier sowohl Sicherheit und dadurch bedingt hohe Verfügbarkeit der Anlagen eine besondere Bedeutung.

Bei der Auslegung von Differential-Antrieben sind daher bei der Betriebsführung wichtige Sonderfälle zu betrachten. So kann zum Beispiel durch das konstante Verhältnis Rotor-Drehzahl zu Drehzahl am Differential-Antrieb, ein Ausfall des Differential-Antriebes schwer-wiegende Schäden nach sich ziehen. Ein Beispiel ist der Ausfall des Differential-Antriebes bei Nennbetrieb der Windkraftanlage. Dadurch geht gleichzeitig das übertragbare Drehmoment am Triebstrang gegen null. Die Drehzahl des Rotors der Windkraftanlage wird in diesem Fall vorzugsweise durch ein schnelles Verstellen der Rotorblattverstellung schlagartig reduziert und der Generator vom Netz getrennt. Aufgrund der relativ hohen Massenträgheit des Generators, wird dieser nur langsam seine Drehzahl wandern. Dadurch ist, sofern der Differential-Antrieb nicht ohne Verzögerung sein Drehmoment zumindest teilweise aufrecht erhalten kann, eine Überdrehzahl des Differential-Antriebes unvermeidbar.

Aus diesem Grund ist z.B. beim Einsatz von Differential-Antrieben eine mechanische Bremse vorgesehen, welche bei Ausfall des Differential-Antriebes für den Triebstrang schädigende Überdrehzahlen verhindert. Die WO2004/109157 A1 zeigt zu diesem Zweck eine mechanische Bremse, welche direkt auf die Generatorwelle wirkt und damit den Generator entsprechend abbremsen kann.

Aufgabe der Erfindung ist eine Energiegewinnungsanlage zur Verfügung zu stellen, welche ein sehr einfaches und sicheres Konzept für derartige Sicherheitsmaßnahmen bietet.

Gelöst wird diese Aufgabe mit einer Energiegewinnungsanlage mit den Merkmalen des Anspruchs 1. Der Vorteil der Erfindung liegt darin, dass keine Bremse für den Abtrieb zum Generator oder den zweiten Antrieb mehr nötig ist, da die elektrische Maschine das Drehmoment aufrecht erhält.

Nachfolgend werden bevorzugte Ausführungsformen der Erfindung unter Bezugnahme auf die angeschlossenen Zeichnungen detailliert beschrieben.

Fig. 1 zeigt für eine 5MW Windkraftanlage gemäß Stand der Technik die Leistungskurve, die Rotordrehzahl und die sich dadurch ergebenden Kennwerte wie Schnelltaufzahl und den Leistungsbeiwert,

Fig. 2 zeigt das Prinzip eines Differentialgetriebes mit einem elektrischen Differential-Antrieb gemäß Stand der Technik,

Fig. 3 zeigt das Prinzip eines hydrostatischen Differential-Antriebes mit Pumpen/Motor-Kombination gemäß Stand der Technik,

Fig. 4 zeigt das Prinzip eines koaxial zur Eingangswelle der Differentiaistufe ausgerichteten Sonder-Drehstrommaschine gemäß Stand der Technik,

Fig. 5 zeigt die Drehzahlverhältnisse am Rotor der Windkraftanlage und die sich dadurch ergebenden maximalen Eingangs-Drehmomente $M_{max}$ für den Differential-Antrieb,

Fig. 6 zeigt beispielhaft die Drehzahl- und Leistungsverhältnisse eines elektrischen Differential-Antriebes über der Windgeschwindigkeit,

Fig. 7 zeigt für das 1-stufige Differentialgetriebe die maximalen Drehmomente und den Größenfaktor y/x in Abhängigkeit vom Nenn-Drehzahlbereich,

Fig. 8 zeigt Übersetzungsverhältnisse und Drehmomente für den Differential-Antrieb mit 1-stufigem und alternativ mit 2-stufigem Differentialgetriebe und die Auswirkungen auf $J_{red}$,

Fig. 9 zeigt den Multiplikationsfaktor f(J) für 1-stufige bzw. 2-stufige Differentialgetriebe, mit dem der Wert des Massenträgheitsmomentes J des Differential-Antriebes zu multiplizieren ist, um das auf die Rotorwelle bezogene $J_{red}$ bei kleinster Rotordrehzahl ($n_{min}$) zu errechnen,

Fig. 10 zeigt für 1-stufige bzw. 2-stufige Differentialgetriebe das erforderliche Drehmoment um einen Drehzahlsprung am Rotor mit einem elektrischen Differential-Antrieb drehzahlmäßig ausregeln zu können,

Fig. 11 zeigt die Drehzahl/Drehmoment-Charakteristik eines elektrischen Differential-Antriebes (PM-Synchronmotor) inkl. Feldschwächebereich im Vergleich zum erforderlichen Drehmoment für den Differential-Antrieb,

Fig. 12 zeigt die maximalen Eingangs-Drehmomente für den Differential-Antrieb und den Größenfaktor y/x in Abhängigkeit vom Feldschwächebereich des elektrischen Differential-Antriebes,

Fig. 13 zeigt die Differenz des Brutto-Energieertrages in Abhängigkeit vom Feldschwächebereich,

Fig. 14 zeigt die Differenz des Brutto-Energieertrags für verschiedene Nenn-Drehzahlbereiche bei unterschiedlichen mittleren Jahreswindgeschwindigkeiten für einen elektrischen Differential-Antrieb mit 80% Feldschwächebereich,

Fig. 15 zeigt die Differenz des Brutto-Energieertrags für verschiedene Nenn-Drehzahlbereiche bei unterschiedlichen mittleren Jahreswindgeschwindigkeiten für einen hydraulischen Differential-Antrieb,

Fig. 16 zeigt die Strom-Produktionskosten für einen elektrischen Differential-Antrieb bei verschiedenen Nenn-Drehzahlbereichen für 1-stufige Differentialgetriebe,

Fig. 17 zeigt die Strom-Produktionskosten für einen elektrischen Differential-Antrieb bei verschiedenen Nenn-Drehzahlbereichen für 2-stufige Differentialgetriebe,

Fig. 18 zeigt eine mit dazwischen geschalteten elektrischen Widerständen kurzeschlossene Drehstrommaschine,

Fig. 19 zeigt eine Lösung mit einem in das Hauptgetriebe integrierten, 1-stufigen Differentialgetriebe,

Fig. 20 zeigt eine Lösung mit einem in den Synchrongenerator integrierten, 1-stufigen Differentialgetriebe,

Fig. 21 zeigt eine alternative Lösung für ein 1-stufiges Differentialgetriebe mit einer koaxialen Verbindung zw. Hohlrad und Differential-Antrieb.

Die Leistung des Rotors einer Windkraftanlage errechnet sich aus der Formel

$$\text{Rotor-Leistung} = \text{Rotorfläche} * \text{Leistungsbeiwert} * \text{Luftdichte}/2 * \text{Windgeschwindigkeit}^3$$

wobei der Leistungsbeiwert abhängig von der Schnelllaufzahl (= Verhältnis Blattspitzen-Geschwindigkeit zu Windgeschwindigkeit) des Rotors der Windkraftanlage ist. Der Rotor einer Windkraftanlage ist für einen optimalen Leistungsbeiwert basierend auf einer im Zuge der Entwicklung festzulegenden Schnelllaufzahl (meist ein Wert zw. 7 und 9) ausgelegt. Aus diesem Grund ist beim Betrieb der Windkraftanlage im Teillastbereich eine entsprechend kleine Drehzahl einzustellen, um einen optimalen aerodynamischen Wirkungsgrad zu gewährleisten.

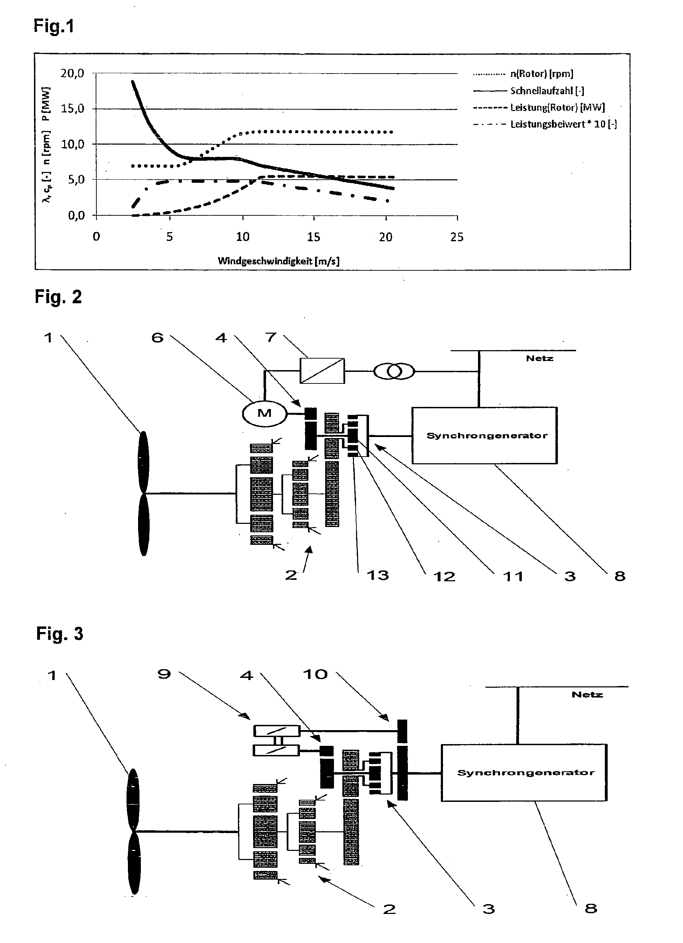

Fig. 1 zeigt die Verhältnisse für Rotorleistung, Rotordrehzahl, Schnelllaufzahl und Leistungsbeiwert für einen vorgegebenen maximalen Drehzahlbereich des Rotors bzw. einer optimalen Schnelllaufzahl von 8,0-8,5. Aus dem Diagramm ist ersichtlich, dass sobald die Schnelllaufzahl von ihrem optimalen Wert von 8,0-8,5 abweicht, der Leistungsbeiwert sinkt, und sich damit gemäß oben genannter Formel die Rotorleistung entsprechend der aerodynamischen Charakteristik des Rotors reduziert.

Fig. 2 zeigt ein mögliches Prinzip eines Differentialsystems für eine Windkraftanlage bestehend aus Differentialstufe 3 bzw. 11 bis 13, einer Anpassungs-Getriebestufe 4 und einem Differential-Antrieb 6. Der Rotor 1 der Windkraftanlage, der auf der Antriebswelle für das Hauptgetriebe 2 sitzt, treibt das Hauptgetriebe 2 an. Das Hauptgetriebe 2 ist ein 3-stufiges Getriebe mit zwei Planetensfufen und einer Stirnradstufe. Zwischen Hauptgetriebe 2 und Generator 8 befindet sich die Differentialstufe 3, welches vom Hauptgetriebe 2 über Planetenträger 12 der Differentialstufe 3 angetrieben wird. Der Generator 8 - vorzugsweise ein fremderregter Synchrongenerator, der bei Bedarf auch eine Nennspannung größer 20kV haben kann - ist mit dem Hohlrad 13 der Differentialstufe 3 verbunden und wird von diesem angetrieben. Das Ritzel 11 der Differentialstufe 3 ist mit dem Differential-Antrieb 6 verbunden. Die Drehzahl des Differential-Antriebes 6 wird geregelt, um einerseits bei variabler Drehzahl des Rotors 1 eine konstante Drehzahl des Generators 8 zu gewährleisten und andererseits das Drehmoment im kompletten Triebstrang der Windkraftanlage zu regeln. Um die Eingangsdrehzahl für den Differential-Antrieb 6 zu erhöhen wird im gezeigten Fall ein 2-stufiges Differentialgetriebe gewählt, welches eine Anpassungs-Getriebestufe 4 in Form einer Stirnradstufe zwischen Differentialstufe 3 und Differential-Antrieb 6 vorsieht. Differentialstufe 3 und Anpassungs-Getriebestufe 4 bilden somit das 2-stufige Differentialgetriebe. Der Differential-Antrieb ist eine Drehstrommaschine, welche über Frequenzumrichter 7 und Transformator 5 ans Netz angeschlossen wird. Alternativ kann der Differential-Antrieb, wie in Fig. 3 gezeigt, auch als z.B. hydrostatische Pumpen/Motor-Kombination 9 ausgeführt werden. In diesem Fall ist die zweite Pumpe vorzugsweise über Anpassungs-Getriebestufe 10 mit der Antriebswelle des Generators 8 verbunden.

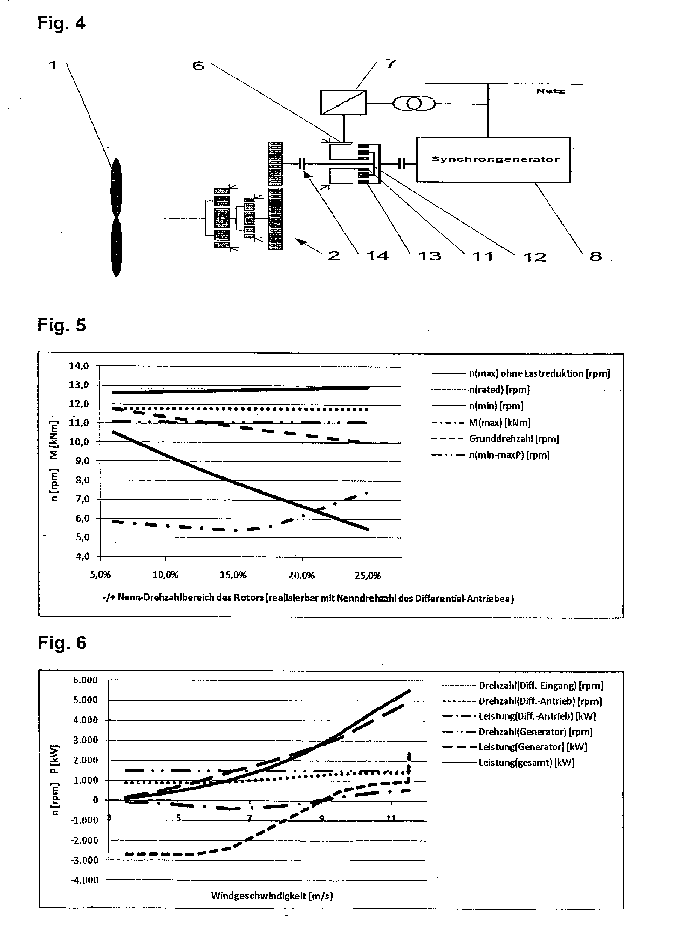

Fig. 4 zeigt eine weitere mögliche Ausführungsform des Differentialgetriebes gemäß Stand der Technik. Hier wird in bereits gezeigter Weise der Planetenträger 12 vom Hauptgetriebe 2 angetrieben und der Generator 8 ist mit dem Hohlrad 13 verbunden bzw. das Ritzel mit dem elektrischen Differential-Antrieb 6. Diese Ausführungsvariante stellt eine 1-stufige Lösung dar, wobei hier aus konstruktiven Gründen eine Sonder-Drehstrommaschine zum Einsatz gebracht wird, welche im Vergleich zu Standard-Drehstrommaschinen wesentlich teurer ist und darüber hinaus ein sehr hohes Massenträgheitsmoment hat. Dies wirkt sich regelungstechnisch besonders negativ in Bezug auf das auf den Rotor 1 bezogene Massenträgheitsmoment des Differential-Antriebes 6 aus.

Die Drehzahlgleichung für das Differentialgetriebe lautet:

$$\text{Drehzahl}_{\text{Generator}} = x * \text{Drehzahl}_{\text{Rotor}} + y * \text{Drehzahl}_{\text{Differential-Antrieb}},$$

wobei die Generatordrehzahl konstant ist, und sich die Faktoren x und y aus den gewählten Getriebeübersetzungen von Hauptgetriebe und Differentialgetriebe ableiten lassen. Das Drehmoment am Rotor wird durch das anstehende Windangebot und den aerodynamischen Wirkungsgrad des Rotors bestimmt. Das Verhältnis zwischen dem Drehmoment an der Rotorwelle und dem am Differential-Antrieb ist konstant, wodurch sich das Drehmoment im Triebstrang durch den Differential-Antrieb regeln lässt. Die Drehmomentgleichung für den Differential-Antrieb lautet:

$$\text{Drehmoment}_{\text{Differential-Antrieb}} = \text{Drehmoment}_{\text{Rotor}} * y / x,$$

wobei der Größenfaktor y/x ein Maß für das notwendige Auslegungs-Drehmoment des Differential-Antriebes ist.

Die Leistung des Differential-Antriebes ist im Wesentlichen proportional dem Produkt aus prozentueller Abweichung der Rotordrehzahl von dessen Grunddrehzahl mal Rotor-Leistung. Dementsprechend erfordert ein großer Drehzahlbereich grundsätzlich eine entsprechend große Dimensionierung des Differential-Antriebes.

Fig. 5 zeigt dies beispielhaft für verschiedene Drehzahlbereiche. Der -/+Nenn-Drehzahlbereich des Rotors definiert dessen prozentuelle Drehzahlabweichung von der Grunddrehzahl des Rotors, der mit Nenndrehzahl des Differential-Antriebs (- ... motorisch bzw. + ... generatorisch) ohne Feldschwächung realisiert werden kann. Die Nenndrehzahl (n) des Differential-Antriebes definiert im Falle einer elektrischen Drehstrommaschine jene maximale Drehzahl, bei der diese dauerhaft das Nenndrehmoment ($M_n$) bzw. die Nennleistung ($P_n$) erbringen kann.

Im Falle eines hydrostatischen Antriebes, wie z.B. einer hydraulischen Axialkolbenpumpe, ist die Nenndrehzahl des Differential-Antriebes jene Drehzahl, bei der dieser mit maximalem Drehmoment ($T_{max}$) maximale Dauerleistung ($P_{0\,max}$) liefern kann. Dabei bestimmen Nenndruck ($p_N$) und Nenngröße (NG) bzw. Verdrängungsvolumen ($V_{g\,max}$) der Pumpe das maximale Drehmoment ($T_{max}$).

Im Nennleistungsbereich dreht der Rotor der Windkraftanlage mit der mittleren Drehzahl $n_{rated}$ zwischen den Grenzen $n_{max}$ und $n_{min-maxP}$. im Teillastbereich zwischen $n_{rated}$ und $n_{min}$, in diesem Beispiel erzielbar mit einem Feldschwächebereich von 80%. Der Regelungs-Drehzahlbereich zwischen $n_{max}$ und $n_{min-maxP}$, welcher ohne Lastreduktion realisierbar ist, wird entsprechen groß gewählt, um Windböen ausregeln zukönnen. Die Größe dieses Drehzahlbereiches hängt von der Böigkeit des Windes bzw. der Massenträgheit des Rotors der Windkraftanlage und der Dynamik des sog. Pitch-Systems (Rotorblatt-Verstellsystem) ab, und liegt üblicherweise bei etwa -/+5%. Im gezeigten Beispiel wurde ein Regelungs-Drehzahlbereich von -/+6% gewählt um entsprechende Reserven für die Ausregelung von Extremböen mit Hilfe von Differential-Antrieben zu haben. Windkraftanlagen mit sehr trägen Pitch-Systemen können aber durchaus auch für Regelungs-Drehzahlbereiche von etwa -/+7% bis -/+8% ausgelegt werden. In diesem Regelungs-Drehzahlbereich muss die Windkraftanlage Nennleistung produzieren, was bedeutet, dass der Differential-Antrieb dabei mit maximalem Drehmoment belastet wird. Das heißt, dass der -/+Nenn-Drehzahlbereich des Rotors etwa gleich groß sein muss, da nur in diesem Bereich der Differential-Antrieb sein Nenndrehmoment leisten kann.

Bei elektrischen und hydrostatischen Differential-Antrieben mit einer Differentialstufe wird die Rotor-Drehzahl, bei der der Differential-Antrieb die Drehzahl gleich 0 hat, die Grunddrehzahl genannt. Da nun bei kleinen Rotor-Drehzahlbereichen die Grunddrehzahl über $n_{min-maxP}$ liegt, muss der Differential-Antrieb das Nenndrehmoment bei Drehzahl gleich 0 erbringen können. Differential-Antriebe, sei es elektrisch oder auch hydraulisch, können jedoch bei Drehzahl gleich 0 nur ein Drehmoment erzeugen, welches deutlich unter dem Nennmoment liegt, was jedoch durch eine entsprechende Überdimensionierung bei der Auslegung kompensiert werden kann. Da jedoch das maximale Auslegungs-Drehmoment der dimensionierende Faktor für einen Differential-Antrieb ist, wirkt sich aus diesem Grund ein kleiner Drehzahlbereich nur beschränkt positiv auf die Größe des Differential-Antriebes aus.

Im Falle eines Antriebskonzeptes mit mehr als einer Differentialstufe, oder mit einem hydrodynamischen Differential-Antrieb kann der -/+Nenn-Drehzahlbereich ersatzweise aus der Formel

$$-/+\text{Nenn-Drehzahlbereich} = -/+ ( n_{max} - n_{min} ) / n_{max} + n_{min} )$$

$$\text{für eine Grunddrehzahl} = ( n_{max} + n_{min} ) * 0{,}5$$

errechnet werden. Die Nenndrehzahl des Differential-Antriebes wird in diesem Fall ersatzweise mit dessen Drehzahlen bei $n_{max}$ bzw. $n_{min}$ festgelegt.

In Fig. 6 sieht man beispielhaft die Drehzahl- bzw. Leistungsverhältnisse für eine Differentialstufe. Die Drehzahl des Generators, vorzugsweise ein fremderregter Mittelspannungs-Synchrongenerator ist durch den Anschluss an das frequenzfeste Stromnetz konstant. Um den Differential-Antrieb entsprechend gut ausnutzen zu können, wird dieser Antrieb im Bereich kleiner der Grunddrehzahl motorisch und im Bereich größer der Grunddrehzahl generatorisch betrieben. Das führt dazu, dass im motorischen Bereich Leistung in die Differentialstufe eingespeist wird und im generatorischen Bereich Leistung der Differentialstufe entnommen wird. Diese Leistung wird im Falle eines elektrischen Differential-Antriebes vorzugsweise dem Netz entnommen bzw. in dieses eingespeist. Im Falle eines hydraulischen Differential-Antriebes wird die Leistung vorzugsweise der Generatorwelle entnommen bzw. dieser zugeführt. Die Summe aus Generatorleistung und Leistung Differential-Antrieb ergibt die für einen elektrischen Differential-Antrieb ins Netz abgegebene Gesamtleistung.

Das Eingangs-Drehmoment für den Differential-Antrieb hängt neben dem Drehmoment am Differential-Eingang auch wesentlich vom Übersetzungsverhältnis des Differentialgetriebes ab. Legt man der Analyse zugrunde, dass das optimale Übersetzungsverhältnis einer Planetenstufe bei einer sogenannten Standübersetzung von etwa 6 liegt, so werden mit einem 1-stufigen Differentialgetriebe die Momente für den Differential-Antrieb nicht proportional dem Drehzahlbereich kleiner. Es sind technisch auch größere Standübersetzungen realisierbar, was dieses Problem bestenfalls reduziert, jedoch nicht beseitigt.

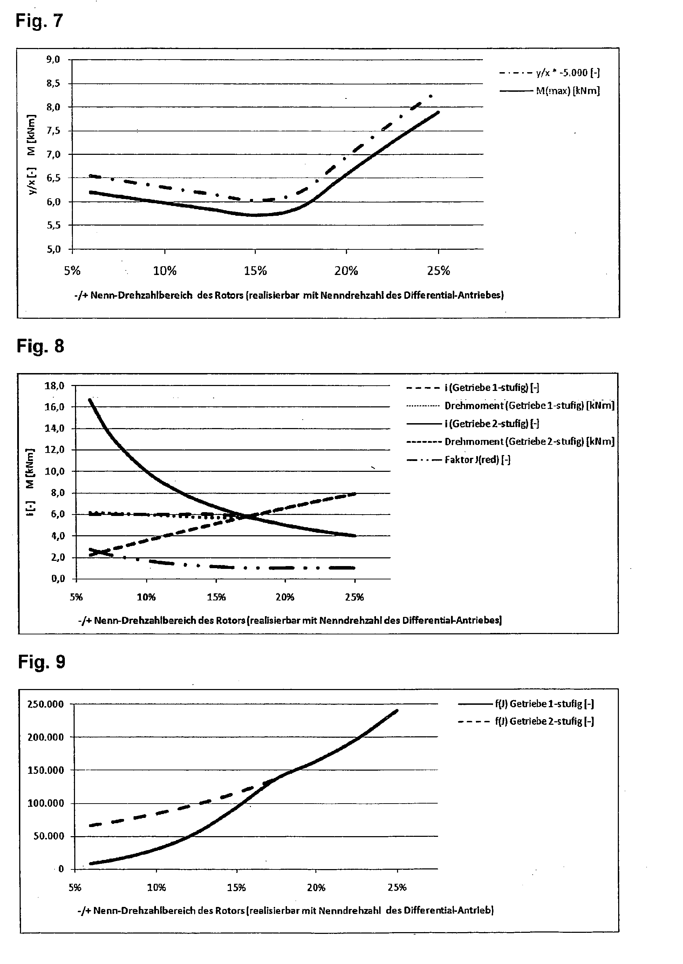

Fig. 7 zeigt für ein 1-stufiges Differentialgetriebe die maximalen Drehmomente und den Größenfaktor y/x (aus Darstellungsgründen mit -5.000 multipliziert) in Abhängigkeit vom Nenn-Drehzahlbereich des Rotors. Bei einem Nenn-Drehzahlbereich von etwa -/+14% bis -/+ 17% ergibt sich für den Differential-Antrieb der kleinste Größenfaktor und demzufolge auch das kleinste maximale Drehmoment ($M_{max}$).

Die Grafik zeigt für 1-stufige Differentialgetriebe, dass bei kleiner werdendem Nenn-Drehzahlbereich die Auslegungs-Drehmomente für den Differential-Antrieb anwachsen. Um dieses Problem zu lösen, kann man ein z.B. 2-stufiges Differentialgetriebe verwenden. Dies kann man beispielsweise durch Implementieren einer Anpassungs-Getriebestufe 4 zwischen Differentialstufe 3 und Differential-Antrieb 6 oder 9 erreichen. Das Eingangs-Drehmoment für die Differentialstufe, das im Wesentlichen deren Kosten bestimmt, kann dadurch jedoch nicht reduziert werden.

Fig. 8 zeigt die Gegenüberstellung der Drehmomente des Differential-Antriebes für ein 1-einstufiges und ein 2-stufiges Differentialgetriebe und den Faktor J(red), der das Verhältnis der auf die Rotorwelle bezogenen Massenträgheitsmomente ($J_{red}$) beider Varianten ist. Es ist aus Fig. 8 klar ersichtlich, dass bei freier Wahl des Übersetzungsverhältnisses des Differentialgetriebes - in dem gezeigten Fall für eine Nenndrehzahl des Differential-Antriebes von etwa 1500rpm - das erforderliche Drehmoment des Differential-Antriebes mit kleiner werdendem Drehzahlbereich entsprechend kleiner wird. Oberhalb eines Nenn-Drehzahtbereiches von etwa -/+16,5% reicht die bei diesem Ausführungsbeispiel angenommene Standübersetzung des 1-stufigen Differentialgetriebes aus, um die Nenndrehzahl des Differential-Antriebes von 1500rpm ohne zusätzliche Anpassungs-Getriebestufe zu erreichen. Die Nachteile eines mehrstufigen Differentialgetriebes sind jedoch die etwas höheren Getriebe-Verluste und höhere Getriebekosten. Darüber hinaus bewirkt die höhere Getriebeübersetzung ein höheres Massenträgheitsmoment des Differential-Antriebes bezogen auf die Rotorwelle der Windkraftanlage ($J_{red}$), obwohl das Massenträgheitsmoment des Differential-Antriebes mit kleiner werdendem Nenndrehmoment ebenfalls kleiner wird. Da die Regelbarkeit des Windkraftanlage jedoch stark von diesem

$J_{red}$ abhängt - je niedriger im Vergleich zum Massenträgheitsmoment des Rotors der Windkraftanlage desto besser die Regelungsdynamik des Differential-Antriebes - ist im gezeigten Fall bei kleinem Drehzahlbereich des Rotors der Windkraftanlage der ca. 2,6-fache Wert von $J_{red}$ für ein 2-stufiges gegenüber einem 1-stufigen Differential-Getriebe ein Dachteil, der (a) eine entsprechend größere Dimensionierung des Differential-Antriebes erfordert bzw. (b) wenn keine entsprechende Kompensations-Maßnahmen getroffen werden, aufgrund der schlechteren Regelungseigenschaften zu höheren Belastungen der Windkraftanlage und schlechterer Stromqualität führt. Daher und auch aufgrund der höheren Getriebekosten und -Verluste, stellt ein 1-stufiges Differentialgetriebe gegenüber mehrstufigen Lösungen nur bedingt und nur bei kleinen Nenn-Drehzahlbereichen eine technisch mögliche Alternative dar.

Gleiches Argument für $J_{red}$ gilt generell auch bei der Wahl des Drehzahlbereiches. Fig. 9 zeigt bei minimaler Rotor-Drehzahl den Multiplikationsfaktor f(J) mit dem der Wert des Massenträgheitsmomentes des Differential-Antriebes zu multiplizieren ist, um das auf die Rotorwelle bezogene $J_{red}$ des Differential-Antriebes bei kleinster Rotordrehzahl ($n_{min}$) zu errechnen.

Um Drehzahlsprünge des Rotors der Windkraftanlage ausregeln zu können, muss der Differential-Antrieb entsprechend über-dimensioniert werden, was mit zunehmendem $J_{red}$, d.h. mit zunehmendem Nenn-Drehzahlbereich bzw. bei mehrstufigem Differential-Antrieb schon bei kleineren Drehzahlbereichen, einen nicht unerheblichen Kostenfaktor darstellt.

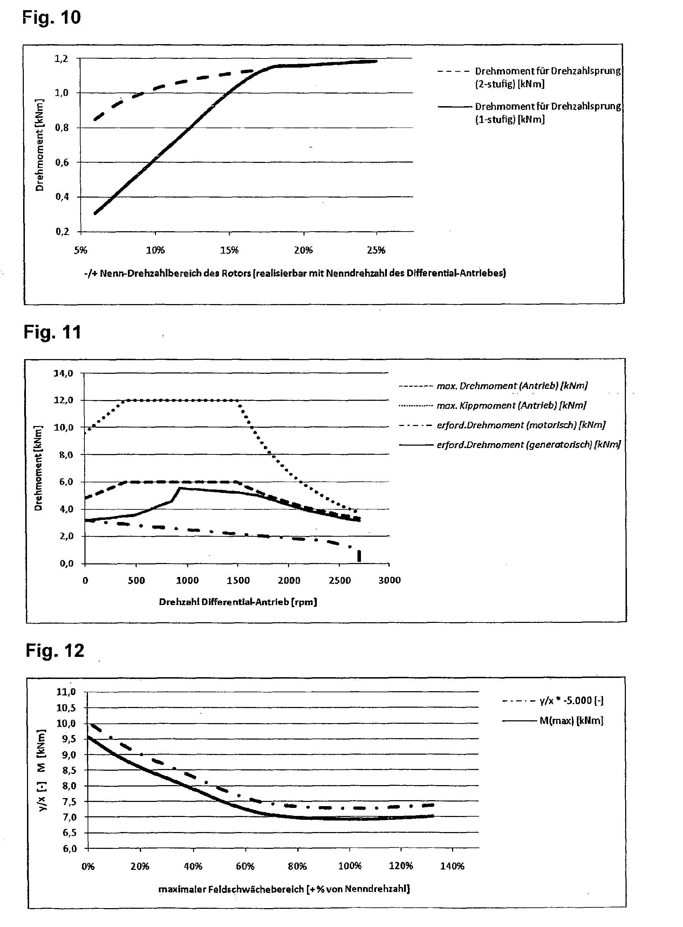

Fig. 10 zeigt das erforderliche Drehmoment für den Differential-Antrieb um eine Windböe ausregeln zu können. Geht man von einer Windböe aus, welche innerhalb von 2 Sekunden von 4,5 m/s auf 11,5 m/s beschleunigt, so bedingt dies abhängig vom Nenn-Drehzahlbereich des Rotors der Windkraftanlage einen Drehzahlsprung von 5,6 bis 10,3rpm auf für alle Nenn-Drehzahlbereiche gleiche Drehzahl von 11,7rpm. Der Differential-Antrieb hat diesem Drehzahlsprung zu folgen wobei das dazu erforderliche Beschleunigungsmoment entsprechend $J_{red}$ und Größe des Drehzahlsprunges ausfällt. Deutlich erkennbar ist, dass hier mehrstufige Differentialgetriebe aufgrund des höheren Getriebe-Übersetzungsverhältnisses höhere Drehmomente erforderlich machen.

Eine Möglichkeit bei gleichbleibender Getriebeübersetzung des Differentialgetriebes den Drehzahlbereich des Rotors der Windkraftanlage zu erweitern und somit den Energieertrag zu erhöhen, ist die Ausnutzung des sogenannten Feldschwächebereiches von elektrischen Differential-Antrieben wie im Falle einer z.B. permanentmagneterregten Synchron-Drehstrommaschine mit Frequenzumrichter.

Der Feldschwächebereich ist jener Drehzahlbereich der über der Nenndrehzahl der elektrischen Drehstrommaschine liegt. Für diese Nenndrehzahl wird auch das Nenn-Drehmoment bzw. das Nenn-Kippmoment definiert. In den Tabellen und weiteren Beschreibungen wird der Feldschwächebereich als Prozentsatz der Drehzahl über der Nenndrehzahl definiert - d.h. die z.B. 1,5-fache Nenndrehzahl entspricht einem Feldschwächebereich von 50%.

Fig. 11 zeigt beispielhaft die Werte für maximales Drehmoment bzw. Kippmoment eines elektrischen Differential-Antriebes mit einer Nenndrehzahl von 1500rpm. Deutlich erkennbar ist, dass die maximal erreichbaren Momente sowohl bei einer Drehzahl gleich null als auch über der Nenndrehzahl kleiner werden. Eine wesentliche Charakteristik von Windkraftanlagen ist jedoch, dass im Teillastbereich, im gezeigten Beispiel entspricht das in etwa dem motorischen Betrieb, die erforderlichen Drehmomente wesentlich geringer sind als die maximal zugelassenen. Im generatorischen Betrieb ist für Drehzahlen größer etwa 1730rpm Lastreduktion für die Windkraftanlage notwendig, damit die zugelassenen maximalen Drehmomente nicht überschritten werden. Fig. 10 zeigt einen Feldschwächebereich von 80% der bis zur 1,8-fachen Nenndrehzahl reicht, was für den für das Beispiel ausgewählten elektrischen Antrieb eine technisch sinnvolle Obergrenze darstellt.

Erwähnenswert ist hier, dass z.B. permanentmagneterregte Synchron-Drehstrommaschinen im Feldschwächebereich sehr gute Wirkungsgrade haben, was ein wesentlicher Vorteil im Zusammenhang mit dem Wirkungsgrad des Differential-Antriebes ist.

Der Betrieb im Feldschwächebereich ist für Drehstrommaschinen abhängig von deren Auslegung bis zu 50% bis 60%, d.h. einer etwa 1,5-fachen bis 1,6-fachen Nenndrehzahl ohne Drehzahl-feedback möglich, darüber hinaus wird der Einsatz von z.B. Encodern notwendig. Da der Einsatz eines Encoders eine zusätzliche Fehlerquelle darstellt, und die sogenannte geberlose Moment- bzw. Drehzahlregelung dynamisch besser ist, ist bei der Festlegung des Feldschwächebereiches ein Optimum zwischen Regelungsdynamik und optimalem Jahresenergieertrag zu finden. Das heißt, dass bei hohen mittleren Windgeschwindigkeiten und den damit zusammenhängenden extremen Böen ein Feldschwächebereich zu wählen ist, der die geberlose Regelung erlaubt um diese Böen entsprechend ausregeln zu können. Bei kleinen mittleren Windgeschwindigkeiten mit eher kleineren auszuregelnden Böen wird auf den optimalen Jahresenergieertrag geachtet und daher ein größtmöglicher Feldschwächebereich mit Drehzahl-feedback gewählt. Das passt auch sehr gut zur Drehzahlcharakteristik des Differential-Antriebes einer Windkraftanlage, welcher bei niedrigen Wiridgeschwindigkeiten motorisch den größtmöglichen Drehzahlbereich ausnutzt.

Um die Auswirkung der Größe des Feldschwächebereichs auf die Größe des Differential-Aniriebs bzw. den Energieertrag der Windkraftanlage bei verschiedenen durchschnittlichen Jahreswindgeschwindigkeiten zu verifizieren, kann man bei fixem Drehzahlbereich des Rotors der Windkraftanlage den Feldschwächebereich des Differential-Antriebes variieren, bei gleichzeitiger Anpassung der Übersetzung des Differentialgetriebes.

Fig. 12 zeigt die maximalen Eingangs-Drehmomente für den Differential-Antrieb und den Größenfaktor y/x (aus Darstellungszwecken mit -5.000 multipliziert) in Abhängigkeit vom Feldschwächebereich. Ab einem Feldschwächebereich von ca. 70% ergeben sich für den Differential-Antrieb optimale Größenfaktoren und demzufolge auch die kleinsten maximalen Drehmomente ($M_{max}$), wobei das absolute Minimum bei einem Feldschwächebereich von 100% liegt.

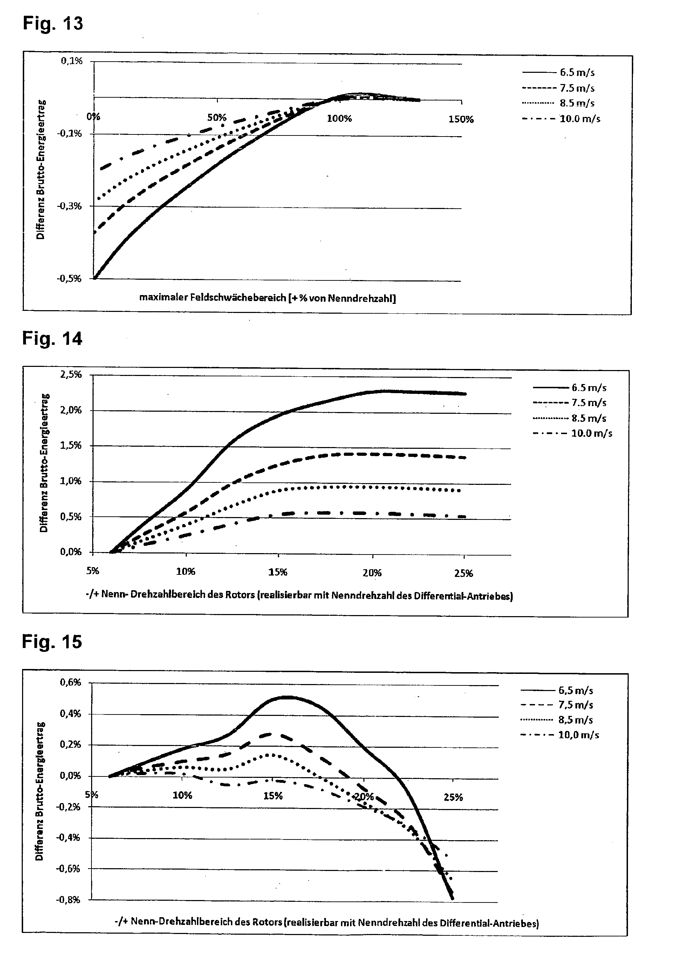

Fig. 13 zeigt die Differenz des Brutto-Energieertrages in Abhängigkeit vom Feldschwächebereich für verschiedene mittlere Jahreswindgeschwindigkeiten. Das Optimum wird bei einem Feldschwächebereich zwischen 100% bis 120% erreicht. Basierend auf diesen Rahmenbedingungen wird ein Feldschwächebereich abhängig von den Einsatzbedingungen, jedoch in jedem Fall ≥ 50% gewählt.

Die mittlere Jahreswindgeschwindigkeit ist das jährliche Mittel der in Nabenhöhe (entspricht dem Rotormittelpunkt) gemessenen Windgeschwindigkeit. Die maximalen mittleren Jahreswindgeschwindigkeiten von 10,0m/s, 8,5m/s, 7,5m/s und 6,0m/s entsprechen den sogenannten IEC-Typenklassen 1, 2, 3 und 4. Als statistische Häufigkeitsverteilung wird standardmäßig eine Rayleigh-Verteilung angenommen.

Darüber hinaus ist erwähnenswert, dass permanentmagneterregte Synchron-Drehstrommaschinen als Differential-Antrieb noch den Vorteil haben, im Vergleich zu Drehstrommaschinen anderer Bauart ein kleines Massenträgheitsmoment im Vergleich zum Nenn-Drehmoment zu haben, was sich, wie schon beschrieben, als vorteilhaft bezüglich Regelung der Windkraftanlage erweist, womit sich der Aufwand für eine besonders massenträgheitsmomentarme Auslegung des Differential-Antriebes immer lohnen wird.

Alternativ haben sogenannte Reluktanz-Maschinen ebenfalls ein sehr kleines Massenträgheitsmoment bei jedoch typischerweise höhere Nenndrehzahlen. Es ist bekannt, dass Reluktanz-Maschinen extrem robust sind, was für den Einsatz im Offshore-Bereich besonders positiv ist.

Die Größe des Differential-Antriebes hat natürlich auch einen wesentlichen Einfluss auf den Gesamtwirkungsgrad der Windkraftanlage. Betrachtet man die oben beschriebenen Ausführungen, so ergibt sich die grundlegende Erkenntnis, dass ein großer Drehzahlbereich des Rotors der Windkraftanlage einen besseren aerodynamischen Wirkungsgrad bewirkt, jedoch andererseits auch eine größere Dimensionierung des Differential-Antriebes erfordert. Dies wiederum führt zu höheren Verlusten, was einem besseren System-Wirkungsgrad (bestimmt durch die Aerodynamik des Rotors und die Verluste des Differential-Antriebes) entgegenwirkt.

Fig. 14 zeigt die Differenz des Brutto-Energieertrages der Windkraftanlage mit elektrischem Differential-Antrieb bei verschiedenen mittleren Jahreswindgeschwindigkeiten abhängig vom Nenn-Drehzahlbereich des Rotors der Windkraftanlage. Dabei basiert der Brutto-Energieertrag auf der Abgabeleistung des Rotors der Windkraftanlage abzüglich der Verluste von Differential-Antrieb (inkl. Frequenzumrichter) und Differentialgetriebe. Ein Nenn-Drehzahlbereich von -/+ 6% ist erfindungsgemäß die Basis, welcher durch den minimal erforderlichen Regelungs-Drehzahlbereich im Nennleistungsbereich von Windkraftanlagen mit Differential-Antrieben erforderlich ist, wobei der Nenn-Drehzahlbereich jenen Rotor-Drehzahlbereich bedeutet, den man mit Nenndrehzahl des Differential-Antriebes realisieren kann. Darüber hinaus wird ein Feldschwächebereich von bis zu 80% über NennDrehzahl des Differential-Antriebes angenommen. Aus der Grafik ist unschwer zu erkennen, dass das Optimum bei einem Nenn-Drehzahlbereich von etwa -/+ 20% erreicht wird, und eine Erweiterung des Nenn-Drehzahlbereiches darüber hinaus keine Vorteile mehr bringt.

Fig. 15 zeigt die Differenz des Brutto-Energieertrages der Windkraftanlage mit hydraulischem Differential-Antrieb bei verschiedenen mittleren Jahreswindgeschwindigkeiten. Hier wirken sich die wesentlich höheren Verluste bei hydraulischen Differential-Antrieben negativ auf den Energieertrag aus, wodurch ein Nenn-Drehzahlbereich zwischen dem für Regelungszwecke minimal erforderlichen -/+ 6% und dem Energieertrags-Optimum von -/+10% bei hohen mittleren Jahreswindgeschwindigkeiten (größer 8,5m/s) und -/+ 15% bei niedrigeren mittleren Jahreswindgeschwindigkeiten sinnvoll erscheint. Der Einbruch der Kurve bei etwa -/+12% Nenn-Drehzahlbereich, resultiert aus dem hohen Nenndrehmoment des Differential-Antriebes bei Drehzahl gleich 0 im Nennbetriebsbereich der Windkraftanlage und der niedrigen Übersetzung in der Anpassungs-Getriebestufe 4.

Letztendlich ist es das Ziel, einen Triebstrang zu entwickeln, der die geringsten Strom-Produktionskosten erlaubt. Die dafür relevanten Punkte bei der Optimierung von Differential-Antrieben sind (a) der Brutto-Energieertrag, (b) die Herstellkosten für den Differential-Antrieb und (c) die die Gesamt-Herstellkosten beeinflussende Qualität der Drehmoment- bzw. Drehzahlregelung der Windkraftanlage. Der Brutto-Energieertrag geht proportional in die Strom-Produktionskosten und damit in die Wirtschaftlichkeit eines Windparks ein. Die Herstellkosten stehen in Relation zu den gesamten Herstellkosten eines sogenannten Windparks, jedoch nur mit dem Prozentsatz der anteiligen Kapitalkosten der Windkraftanlage an den Gesamtkosten des Windparks inkl. Wartungs- und Betriebskosten. Durchschnittlich ist dieser windkraftanlagenspezifische Anteil an den Strom-Produktionskosten bei sogenannten Onshore-Projekten etwa 2/3 und bei Off-shore-Projekten etwa 1/3. Durchschnittlich kann man daher einen Prozentsatz von etwa 50% definieren. Das bedeutet, dass eine Differenz im Jahresenergieertrag durchschnittlich doppelt so hoch zu bewerten ist wie die Differenz in den Herstellkosten der Windkraftanlage. Das heißt, wenn sich im gezeigten Beispiel für elektrische Differential-Antriebe ein optimaler Größenfaktor schon bei einem Nenn-Drehzahlbereich von etwa -/+14% bis -/+ 17% einstellt, so wirkt sich dieser kostenbestimmende Faktor prozentmäßig weniger stark auf die Stromproduktionskosten aus als der optimale Energieertrag ab einem Nenn-Drehzahlbereich von etwa -/+20%.

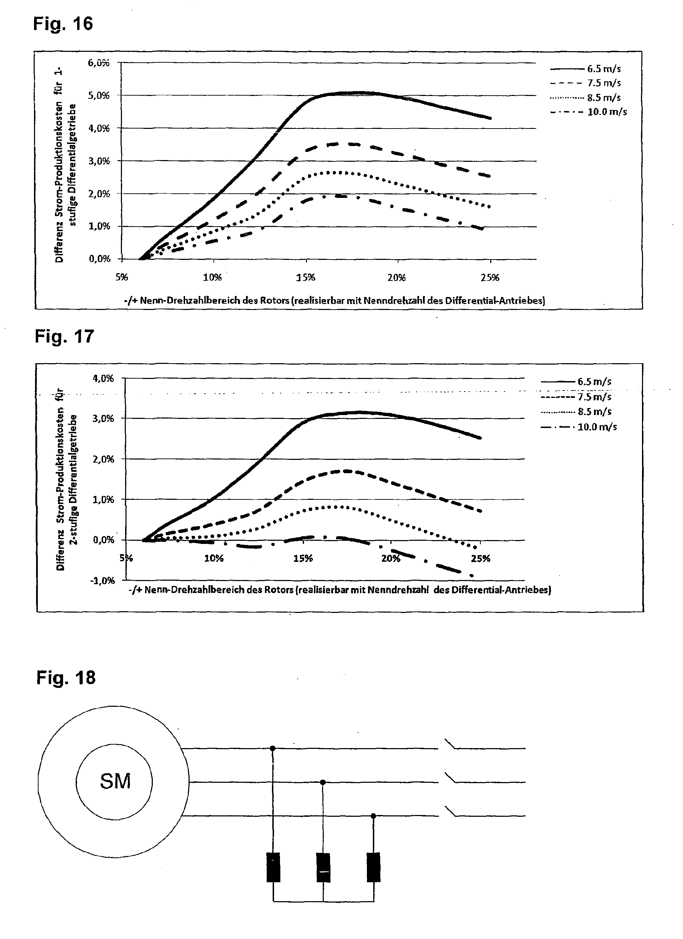

Fig. 16 zeigt die Auswirkungen unterschiedlicher Drehzahlbereiche auf die Strom-Produktionskosten des Windparks mit 1-stufigem Differentialgetriebe und elektrischem Differential-Antrieb. Hier ist für alle Windgeschwindigkeitsbedingungen ein sehr guter Wert bei einem Nenn-Drehzahlbereich zwischen -/+15,0% und -/+20,0% und ein Optimum von etwa -/+17,5% zu erkennen.

Fig. 17 zeigt die Auswirkungen unterschiedlicher Drehzahlbereiche auf die Strom-Produktionskosten des Windparks mit 2-stufigem Differentialgetriebe (unterhalb eines Nenn-Drehzahlbereiches von etwa -/+16,5%) mit elektrischem Differential-Antrieb. Vor allem bei kleineren mittleren Jahreswindgeschwindigkeiten ist auch hier das Optimum bei einem Drehzahlbereich zwischen 15,0% und 20,0% zu erkennen. Bei mittleren Jahreswindgeschwindigkeiten größer 8,5 m/s stellt jedoch auch ein kleiner Drehzahlbereich von aus Regelungsgründen zumindest +/- 6% bis etwa -/+10% eine attraktive Variante dar. Das heißt, dass mehrstufige Differentialgetriebe bei sehr hohen mittleren Jahreswindgeschwindigkeiten konkurrenzfähig mit 1-stufigen Lösungen sind.

Bei der Auslegung von Differential-Antrieben sind jedoch noch weitere wichtige Sonderfälle zu betrachten. So kann zum Beispiel durch das konstante Verhältnis Rotor-Drehzahl zu Drehzahl am Differential-Antrieb, ein Ausfall des Differential-Antriebes schwerwiegende Schäden nach sich ziehen. Ein Beispiel ist der Ausfall des Differential-Antriebes bei Nennbetrieb der Windkraftanlage. Dadurch geht gleichzeitig das übertragbare Drehmoment am Triebstrang gegen null. Die Drehzahl des Rotors der Windkraftanlage wird in diesem Fall vorzugsweise durch ein schnelles Verstellen der Rotorblattverstellung schlagartig reduziert und der Generator vom Netz getrennt. Aufgrund der relativ hohen Massenträgheit des Generators, wird dieser nur langsam seine Drehzahl ändern. Dadurch ist, sofern der Differential-Antrieb nicht ohne Verzögerung sein Drehmoment zumindest teilweise aufrecht erhalten kann, eine Überdrehzahl des Differential-Antriebes unvermeidbar.

Aus diesem Grund ist z.B. beim Einsatz von hydrostatischen Differential-Antrieben eine mechanische Bremse vorgesehen, welche bei Ausfall des Differential-Antriebes für den Triebstrang schädigende Überdrehzahlen verhindert. Die WO2004/109157 A1 zeigt zu diesem Zweck eine mechanische Bremse, welche direkt auf die Generatorwelle wirkt und damit den Generator entsprechend abbremsen kann.

Die oben bereits mehrfach genannten permanentmagneterregten Synchron-Drehstrommaschinen, welche in Kombination mit einem Frequenzumrichter als Differential-Antrieb eingesetzt werden können, haben den Vorteil, dass sie sehr ausfallsicher sind, und einfach durch Kurzschließen der Primärwicklung, mit oder ohne dazwischen geschalteten elektrischen Widerständen, ein Drehmoment bis etwa zur Höhe des Nennmomentes aufrecht erhalten werden kann. Das heißt, dass sich - z.B. im Falle eines Umrichterausfalles - die Synchron-Drehstrommaschine durch eine einfache elektrische Schaltung automatisch (failsafe) kurzschließen lässt, und damit ein Drehmoment aufrecht erhalten wird, welches bei Nenndrehzahl bis etwa Nenngröße haben kann, und mit kleiner werdender Drehzahl entsprechend abnimmt, um bei sehr kleinen Drehzahlen gegen 0 zu gehen. Dadurch wird auf einfache Weise eine Überdrehzahl des Differential-Antriebes verhindert.

Fig. 18 zeigt eine Möglichkeit eine Drehstrommaschine mit dazwischen geschalteten elektrischen Widerständen kurzzuschließen.

Im Falle des Ausfalls der permanentmagneterregten Synchron-Drehstrommaschine ist die Drehzahl des Rotors so zu regeln, dass die Drehzahl des Differential-Antriebes eine den Antrieb schädigende kritische Drehzahl nicht überschreitet. Basierend auf den gemessenen Drehzahlen von Generator und Rotor der Windkraftanlage wird entsprechend der Drehzahlgleichung für das Differentialgetriebe

$$\text{Drehzahl}_{\text{Generator}} = x * \text{Drehzahl}_{\text{Rotor}} + y * \text{Drehzahl}_{\text{Differential-Antrieb}} ,$$

mittels Rotorblattverstellung die Drehzahl des Rotors so geregelt, dass die Drehzahl des Differential-Antriebes einen vorgegebenen kritischen Grenzwert nicht überschreitet.

Bei Ausfall der Regelung der Windkraftanlage, welcher unter Umständen auch den gleichzeitigen Ausfall von Rotorblattregelung und Regelung des Differential-Antriebes zur Folge haben kann, bewirkt das Kurzschließen der Primärwicklung der permanentmagneterregten Synchron-Drehstrommaschine, dass ein Drehmoment aufrecht erhalten wird, welches deren Überdrehzahl verhindert. Von einem gleichzeitigen Ausfall von Regelung der Windkraftanlage und permanentmagneterregter Synchron-Drehstrommaschine ist nicht auszugehen.

Wenn die Windkraftanlage z.B. außer Betrieb ist, kann durch Kurzschließen der permanentmagneterregten Synchron-Drehstrommaschine ebenfalls ein unerwünschtes Beschleunigen des Differential-Antriebes verhindert werden.

Aus oben beschriebenen Gründen der optimalen Windkraftanlagen-Regelung, der Gesamtwirkungsgrade und des einfachen bzw. kostenoptimalen mechanischen Aufbaus der Differentialgetriebe stellt ein 1-stufiges Differentialgetriebe die ideale technische Lösung dar. Hierbei gibt es verschiedene Ansätze für die konstruktive Einbindung des Differential-Antriebes.

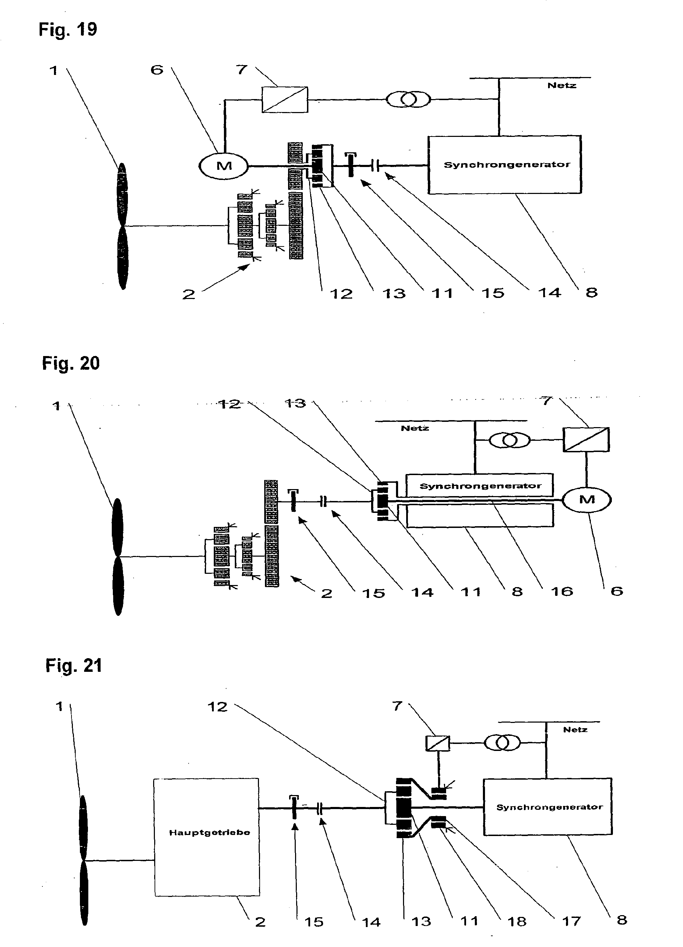

Fig.19 zeigt eine mögliche Ausführungsvariante gemäß vorliegender Erfindung. Der Rotor 1 treibt das Hauptgetriebe 2 an und dieses über Planetenträger 12 die Differentialstufe 11 bis 13. Der Generator 8 ist mit dem Hohlrad 13 verbunden, bzw. das Ritzel 11 mit dem Differential-Antrieb 6. Das Differentialgetriebe ist 1-stufig, und der Differential-Antrieb 6 ist in koaxialer Anordnung sowohl zur Abtriebswelle des Hauptgetriebes 2, als auch zur Antriebswelle des Generators 8. Da die Verbindung zw. Ritzel 11 und Differential-Antrieb 6 durch die Stirnradstufe und die Abtriebswelle des Hauptgetriebes 2 geht, ist die Differentialstufe vorzugsweise ein integraler Teil des Hauptgetriebes 2 und dieses ist dann vorzugsweise über eine Bremse 15, die auf den Rotor 1 wirkt, und eine Kupplung 14 mit dem Generator 8 verbunden.

Fig. 20 zeigt eine weitere mögliche Ausführungsvariante gemäß vorliegender Erfindung. Auch hier treibt der Rotor 1 das Hauptgetriebe 2 an und dieses über Planetenträger 12 die Differentialstufe 11 bis 13. Der Generator 8 ist mit dem Hohlrad 13 verbunden und das Ritzel 11 mit dem Differential-Antrieb 6. Das Differentialgetriebe ist 1-stufig, und der Differential-Antrieb 6 ist in koaxialer Anordnung sowohl zur Abtriebswelle des Hauptgetriebes 2, als auch zur Antriebswelle des Generators 8. Hier ist jedoch beim Generator 8 eine Hohlwelle vorgesehen, welche erlaubt, dass der Differential-Antrieb an der dem Differentialgetriebe abgewandten Seite des Generators 8 positioniert wird. Dadurch ist die Differentialstufe vorzugsweise eine separate, an den Generator 8 angebundene Baugruppe, welche dann vorzugsweise über eine Kupplung 14 und eine Bremse 15 mit dem Hauptgetriebe 2 verbunden ist. Die Verbindungswelle 16 zwischen Ritzel 11 und Differential-Antrieb 6 kann vorzugsweise in einer besonders massenträgheitsmomentarmen Variante als z.B. Faserverbund-Welle mit Glasfaser oder Kohlefaser ausgeführt sein.

Wesentlicher Vorteil der gezeigten koaxialen, 1-stufigen Ausführungsform beider Varianten sind (a) die konstruktive Einfachheit des Differentialgetriebes, (b) der dadurch hohe Wirkungsgrad des Differential-Getriebes und (c) das verhältnismäßig geringe auf den Rotor 1 bezogene Massenträgheitsmoment des Differential-Antriebes 6. Darüber hinaus kann bei der Ausführungsvariante gemäß Fig. 19 das Differentialgetriebe als separate Baugruppe gefertigt und unabhängig vom Hauptgetriebe implementiert und gewartet werden. Der Differential-Antrieb 6 kann natürlich auch durch einen hydrostatischen Antrieb ersetzt werden, wozu jedoch ein zweites, mit dem hydrostatischen Differential-Antrieb in Wechselwirkung stehendes Pumpenelement durch vorzugsweise den Generator 8 angetrieben werden muss.

Für hohe mittlere Jahreswindgeschwindigkeiten kann für die Ausführungen gem. Fig. 19 und 20 eine Anpassungs-Getriebestufe 4 (wie grundsätzlich in Fig. 2 oder 3 gezeigt) zwischen Differentialstufe 11 bis 13 und Differential-Antrieb 6 implementiert werden.

Die Ausführungsvarianten gemäß Fig. 19 und Fig. 20 unterscheiden sich gegenüber dem Stand der Technik gemäß Fig. 4 im wesentlichen durch die Einsetzbarkeit einer Standard-Drehstrommaschine und dem einfachen und kostengünstigen Aufbau der Differentialstufe welche keine Hohlwellen-Lösung für Drehstrommaschine und Ritzel notwendig macht, und bezüglich Massenträgheitsmoment bezogen auf die Rotorwelle ($J_{red}$) entscheidende Vorteile im Bezug auf Regelung der Windkraftanlage haben.

Die Ausführungsvarianten gemäß Fig. 19 und Fig. 20 unterscheiden sich jedoch wesentlich bezüglich den Auswirkungen einer sogenannten Notbremsung der Windkraftanlage mittels Bremse 15. Geht man davon aus, dass bei Aktivierung der Bremse 15 üblicherweise ein Bremsmoment von bis zu 2,5-fachem Nennmoment wirkt, so wirkt dieses aufgeteilt auf Rotor, Generator und Differential-Antrieb entsprechend deren reduzierter Massenträgheitsmomente. Diese sind natürlich abhängig von den Massenverhältnissen der ausgeführten Windkraftanlage. Als realistisches Beispiel kann man bei Nennbetrieb einer 5MW-Windkraftanlage bezogen auf die Bremse 15 etwa 1.900 kgm2 für den Rotor 1, etwa 200 kgm2 für den Synchrongenerator 8 und etwa 10 kgm2 für den Differential-Antrieb 6 annehmen. Das heißt ein Großteil (etwa 90% bzw. 2,2-faches Rotor-Nennmoment) des Bremsmomentes wirkt auf die Rotorwelle der Windkraftanlage. Da nun bei der Ausführungsvariante gemäß Fig. 19 der Differential-Antrieb im Drehmomenten-Fluss zwischen Bremse 15 und Rotor 1 liegt, muss er entsprechend den konstanten Drehmomentverhältnissen zwischen Rotor und Differential-Antrieb ebenfalls das etwa 2,2-fache Nennmoment halten.

Ein wesentlicher Vorteil der Ausführungsvariante gemäß Fig. 20 ist, dass bei Einfall der Bremse 15 deren Bremsmoment nicht über Differentialgetriebe auf den Massenträgheitsmoment bestimmenden Rotor wirkt. In diesem Fall wirken nur etwa 9,5% des Bremsmomentes auf den Generator 8 bzw. etwa 0,5% auf den Differential-Antrieb 6. Durch die gemäß Fig. 19 gezeigte Anordnung von Bremse 15 und Differentialgetriebe 11 bis 13, macht das Kurzschließen der permanenterregten Synchron-Drehstrommaschine zur Aufrechterhaltung des Drehmomentes im Differential-Antrieb erst Sinn, da ansonsten im Notfall ein dessen Nenndrehmoment wesentlich überschreitendes Drehmoment anstehen würde.

Figur 21 zeigt eine weitere mögliche Ausführungsform des Differentialgetriebes. Hier wird in bereits gezeigter Weise der Planetenträger 12 vom Hauptgetriebe 2 angetrieben, jedoch ist der Generator 8 mit dem Ritzel 11 verbunden bzw. das Hohlrad mit dem elektrischen Differential-Antrieb bestehend aus Rotor 17 und Stator 18. Auch diese Ausführungsvariante stellt eine koaxiale, 1-stufige Lösung dar, wobei getriebetechnische Rahmenbedingungen zu einer relativ niedrigen Drehzahl des Rotors 15 führen. Dies wirkt sich regelungstechnisch besonders positiv in Bezug auf das auf den Rotor 1 bezogene Massenträgheitsmoment des Differential-Antriebes 17 bis 18 aus.

Die oben beschriebenen Ausführungen sind bei technisch ähnlichen Anwendungen ebenfalls umsetzbar. Dies betrifft v.a. Wasserkraftwerke zur Ausnutzung von Fluss- und Meeresströmungen. Für diese Anwendung gelten die gleichen Grundvoraussetzungen wie für Windkraftanlagen, nämlich variable Strömungsgeschwindigkeit. Die Antriebswelle wird in diesen Fällen von den vom Strömungsmedium, beispielsweise Wasser, angetriebenen Einrichtungen direkt oder indirekt angetrieben. In weiterer Folge treibt die Antriebswelle direkt oder indirekt das Differenzialgetriebe an.

**Patentansprüche**

1. Energiegewinnungsanlage, insbesondere Windkraftanlage, mit einer Antriebswelle, einem Generator (8) und mit einem Differentialgetriebe (11 bis 13) mit drei An- bzw. Abtrieben, wobei ein erster Antrieb mit der Antriebswelle, ein Abtrieb mit einem Generator (8) und ein zweiter Antrieb mit einer elektrischen Maschine (6) als Differential-Antrieb verbunden ist, **gekennzeichnet durch** eine elektrische Schaltung, mit der die elektrische Maschine (6) kurzschließbar ist und die elektrische Maschine eine permanentmagneterregte Synchronmaschine ist.

2. Energiegewinnungsanlage nach Anspruch 1, **dadurch gekennzeichnet, dass** die elektrische Maschine (6) bei einer Störung zum Aufrechterhalten eines Drehmomentes des Differential-Antriebes kurzschließbar ist.

3. Energiegewinnungsanlage nach Anspruch 1 oder 2, **dadurch gekennzeichnet, dass** die elektrische Maschine (6) kurzschließbar ist, wenn keine Störung vorliegt.

4. Energiegewinnungsanlage nach einem der Ansprüche 1 bis 3, **dadurch gekennzeichnet, dass** beim Kurzschließen der elektrischen Maschine (6) elektrische Widerstände zwischengeschaltet werden.

5. Energiegewinnungsanlage nach einem der Ansprüche 1 bis 4, **dadurch gekennzeichnet, dass** das Differentialgetriebe (11 bis 13) einstufig ausgeführt ist.

6. Energiegewinnungsanlage nach einem der Ansprüche 1 bis 4, **dadurch gekennzeichnet, dass** sie ein mehrstufiges Differentialgetriebe (3, 4) aufweist.

7. Energiegewinnungsanlage nach einem der Ansprüche 1 bis 6, **dadurch gekennzeichnet, dass** eine Bremse (15), die auf die Antriebswelle wirkt, auf der Seite des Differentialgetriebes (11 bis 13) angeordnet ist, auf welcher der erste Antrieb angeordnet ist.

8. Energiegewinnungsanlage nach einem der Ansprüche 1 bis 7, **dadurch gekennzeichnet, dass** das Differentialgetriebe (11 bis 13) ein Planetengetriebe ist und dass die elektrische Maschine (6) mit dem Sonnenrad (11) des Differentialgetriebes verbunden ist.

9. Energiegewinnungsanlage nach einem der Ansprüche 1 bis 7, **dadurch gekennzeichnet, dass** das Differentialgetriebe (11 bis 13) ein Planetengetriebe ist und dass die elektrische Maschine (6) mit dem Hohlrad (13) des Differentialgetriebes verbunden ist.

10. Energiegewinnungsanlage nach einem der Ansprüche 1 bis 9, **dadurch gekennzeichnet, dass** die elektrische Maschine (6) koaxial zur Welle des Generators (8) angeordnet ist.

11. Energiegewinnungsanlage nach Anspruch 10, **dadurch gekennzeichnet, dass** die elektrische Maschine (6) auf der vom Differentialgetriebe (11 bis 13) abgewandten Seite des Generators (8) angeordnet ist.

12. Energiegewinnungsanlage nach einem der Ansprüche 1 bis 10, **dadurch gekennzeichnet, dass** die elektrische Maschine (6) auf der vom Generator (8) abgewandten Seite des Differentialgetriebes (11 bis 13) angeordnet ist.

13. Energiegewinnungsanlage nach einem der Ansprüche 1 bis 12, **dadurch gekennzeichnet, dass** sie nur eine Differentialstufe (11 bis 13) aufweist.

14. Energiegewinnungsanlage nach einem der Ansprüche 1 bis 13, **dadurch gekennzeichnet, dass** die Antriebswelle die Rotorwelle einer Windkraftanlage. ist.

**Claims**

1. An energy production installation, particularly a wind power installation, having a drive shaft, a generator (8) and having a differential gearbox (11 to 13) with three drives or outputs, wherein a first drive is connected to the drive shaft, an output is connected to a generator (8) and a second drive is connected to an electric machine (6) as differential drive, **characterised by** an electrical circuit, using which, the electric machine (6) can be short-circuited and the electric machine is a synchronous machine excited by a permanent magnet.

2. The energy production installation according to Claim 1, **characterised in that** the electric machine (6) can be short-circuited in the event of a fault to maintain a torque of the differential drive.

3. The energy production installation according to Claim 1 or 2, **characterised in that** the electric machine (6) can be short-circuited if there is no fault present.

4. The energy production installation according to one of Claims 1 to 3, **characterised in that** electrical resistances are interposed in the event of short circuiting of the electric machine (6).

5. The energy production installation according to one of Claims 1 to 4, **characterised in that** the differential gearbox (11 to 13) is constructed to be single stage.

6. The energy production installation according to one of Claims 1 to 4, **characterised in that** it has a multi-stage differential gearbox (3, 4).

7. The energy production installation according to one of Claims 1 to 6, **characterised in that** a brake (15), which acts on the drive shaft, is arranged on the side of the differential gearbox (11 to 13), on which the first drive is arranged.

8. The energy production installation according to one of Claims 1 to 7, **characterised in that** the differential gearbox (11 to 13) is a planetary gearbox and **in that** the electric machine (6) is connected to the sun gear (11) of the differential gearbox.

9. The energy production installation according to one of Claims 1 to 7, **characterised in that** the differential gearbox (11 to 13) is a planetary gearbox and **in that** the electric machine (6) is connected to the ring gear (13) of the differential gearbox.

10. The energy production installation according to one of Claims 1 to 9, **characterised in that** the electric machine (6) is arranged coaxially to the shaft of the generator (8).

11. The energy production installation according to Claim 10, **characterised in that** the electric machine (6) is arranged on the side of the generator (8) facing away from the differential gearbox (11 to 13).

12. The energy production installation according to one of Claims 1 to 10, **characterised in that** the electric machine (6) is arranged on the side of the differential gearbox (11 to 13) facing away from the generator (8).

13. The energy production installation according to one of Claims 1 to 12, **characterised in that** it has only one differential stage (11 to 13).

14. The energy production installation according to one of Claims 1 to 13, **characterised in that** the drive shaft is the rotor shaft of a wind power installation.

**Revendications**

1. Dispositif de production d'énergie, en particulier éolienne, avec un arbre d'entrée, un générateur (8), et avec une transmission différentielle (11 à 13) avec trois entrées et/ou sorties, moyennant quoi une première entrée est reliée à l'arbre d'entrée, une sortie étant reliée à un générateur (8) et une deuxième entrée étant reliée à une machine électrique (6) en tant qu'entrée différentielle, **caractérisé par** un circuit électrique avec lequel il est possible de court-circuiter la machine électrique (6) et en ce que la machine électrique est une machine synchrone excitée par aimant permanent.

2. Dispositif de production d'énergie selon la revendication 1, **caractérisé en ce que** la machine électrique (6) peut être court-circuitée en cas de perturbation afin de maintenir un couple de l'entrée différentielle.

3. Dispositif de production d'énergie selon la revendication 1 ou 2, **caractérisé en ce que** la machine électrique (6) peut être court-circuitée lorsqu'il n'y a pas de perturbation.

4. Dispositif de production d'énergie selon l'une des revendications 1 à 3, **caractérisé en ce que** des résistances électriques sont intercalées lors du court-circuitage de la machine électrique (6).

5. Dispositif de production d'énergie selon l'une des revendications 1 à 4, **caractérisé en ce que** la transmission différentielle (11 à 13) est réalisée à un étage.

6. Dispositif de production d'énergie selon l'une des revendications 1 à 4, **caractérisé en ce qu'**il présente une transmission différentielle (3, 4) à étages multiples.

7. Dispositif de production d'énergie selon l'une des revendications 1 à 6, **caractérisé en ce qu'**un frein (15), lequel agit sur l'arbre d'entrée, est disposé sur le côté de la transmission différentielle (11 à 13) sur lequel la première entrée est disposée.

8. Dispositif de production d'énergie selon l'une des revendications 1 à 7, **caractérisé en ce que** la transmission différentielle (11 à 13) est un train planétaire et **en ce que** la machine électrique (6) est reliée à la roue solaire (11) de la transmission différentielle.

9. Dispositif de production d'énergie selon l'une des revendications 1 à 7, **caractérisé en ce que** la transmission différentielle (11 à 13) est un train planétaire et **en ce que** la machine électrique (6) est reliée à la roue à denture intérieure (13) de la transmission différentielle.

10. Dispositif de production d'énergie selon l'une des revendications 1 à 9, **caractérisé en ce que** la machine électrique (6) est disposée coaxialement à l'arbre du générateur (8).

11. Dispositif de production d'énergie selon la revendication 10, **caractérisé en ce que** la machine électrique (6) est disposée sur le côté, lequel tourne le dos à la transmission différentielle (11 à 13), du générateur (8).

12. Dispositif de production d'énergie selon l'une des revendications 1 à 10, **caractérisé en ce que** la machine électrique (6) est disposée sur le côté, lequel tourne le dos au générateur (8), de la transmission différentielle (11 à 13).

13. Dispositif de production d'énergie selon l'une des revendications 1 à 12, **caractérisé en ce qu'**il comprend seulement un étage différentiel (11 à 13).

14. Dispositif de production d'énergie selon l'une des revendications 1 à 13, **caractérisé en ce que** l'arbre d'entrée est l'arbre de rotor d'une éolienne.

**Fig.1**

**Fig. 2**

**Fig. 3**

## Fig. 4

## Fig. 5

Legend:
- n(max) ohne Lastreduktion [rpm]
- n(rated) [rpm]
- n(min) [rpm]
- M(max) [kNm]
- Grunddrehzahl [rpm]
- n(min-maxP) [rpm]

-/+ Nenn-Drehzahlbereich des Rotors (realisierbar mit Nenndrehzahl des Differential-Antriebes)

## Fig. 6

Legend:
- Drehzahl(Diff.-Eingang) [rpm]
- Drehzahl(Diff.-Antrieb) [rpm]
- Leistung(Diff.-Antrieb) [kW]
- Drehzahl(Generator) [rpm]
- Leistung(Generator) [kW]
- Leistung(gesamt) [kW]

Windgeschwindigkeit [m/s]

EP 2 342 455 B1

## Fig. 7

-/+ Nenn-Drehzahlbereich des Rotors (realisierbar mit Nenndrehzahl des Differential-Antriebes)

Legend:
- – · – · – y/x * -5.000 [-]
- ——— M(max) [kNm]

## Fig. 8

-/+ Nenn-Drehzahlbereich des Rotors (realisierbar mit Nenndrehzahl des Differential-Antriebes)

Legend:
- – – – – i (Getriebe 1-stufig) [-]
- ············· Drehmoment (Getriebe 1-stufig) [kNm]
- ——— i (Getriebe 2-stufig) [-]
- ------- Drehmoment (Getriebe 2-stufig) [kNm]
- — · · — Faktor J(red) [-]

## Fig. 9

-/+ Nenn-Drehzahlbereich des Rotors (realisierbar mit Nenndrehzahl des Differential-Antrieb)

Legend:
- ——— f(J) Getriebe 1-stufig [-]
- – – – – f(J) Getriebe 2-stufig [-]

## Fig. 10

- - - - Drehmoment für Drehzahlsprung (2-stufig) [kNm]

———— Drehmoment für Drehzahlsprung (1-stufig) [kNm]

-/+ Nenn-Drehzahlbereich des Rotors (realisierbar mit Nenndrehzahl des Differential-Antriebes)

## Fig. 11

------- max. Drehmoment (Antrieb) [kNm]

············· max. Kippmoment (Antrieb) [kNm]

- · - · - erford.Drehmoment (motorisch) [kNm]

———— erford.Drehmoment (generatorisch) [kNm]

Drehzahl Differential-Antrieb [rpm]

## Fig. 12

- · - · - y/x * -5.000 [-]

———— M(max) [kNm]

maximaler Feldschwächebereich [+ % von Nenndrehzahl]

EP 2 342 455 B1

**Fig. 13**

maximaler Feldschwächebereich [+% von Nenndrehzahl]

Legend: 6.5 m/s, 7.5 m/s, 8.5 m/s, 10.0 m/s

**Fig. 14**

-/+ Nenn- Drehzahlbereich des Rotors (realisierbar mit Nenndrehzahl des Differential-Antriebes)

Legend: 6.5 m/s, 7.5 m/s, 8.5 m/s, 10.0 m/s

**Fig. 15**

-/+ Nenn-Drehzahlbereich des Rotors (realisierbar mit Nenndrehzahl des Differential-Antriebes)

Legend: 6,5 m/s, 7,5 m/s, 8,5 m/s, 10,0 m/s

17

**Fig. 16**

**Fig. 17**

**Fig. 18**

**Fig. 19**

**Fig. 20**

**Fig. 21**

**IN DER BESCHREIBUNG AUFGEFÜHRTE DOKUMENTE**

**In der Beschreibung aufgeführte Patentdokumente**

- WO 2004109157 A1